# EUROPÄISCHE PATENTSCHRIFT

(11) **EP 1 225 378 B1**
(45) Veröffentlichungstag und Bekanntmachung des Hinweises auf die Patenterteilung: **14.06.2006**
(21) Anmeldenummer: 01129669.6
(22) Anmeldetag: 13.12.2001
(51) Int. Cl.: F16J 15/32

(54) **Dichtungsanordnung**
Sealing arrangement
Dispositif d'étanchéité

(30) Priorität: 18.01.2001 DE 10102077
(43) Veröffentlichungstag der Anmeldung: 24.07.2002
(73) Patentinhaber: Carl Freudenberg KG, 69469 Weinheim (DE)
(72) Erfinder: Devouassoux, Serge, 52200 Langres (FR); Guillerme, Celine, 52200 Langres (FR); Kammerer, Eric, 52200 Langres (FR)

(56) Entgegenhaltungen:
- WO-A-94/29622
- DE-A- 19 836 986

## Beschreibung

Die Erfindung betrifft eine Dichtungsanordnung, umfassend eine Manschette aus polymerem Werkstoff mit einem Halteabschnitt und einem Dichtabschnitt, wobei der Dichtabschnitt ein abzudichtendes Maschinenelement unter elastischer Vorspannung umfangsseitig dichtend umschließt und auf der dem Maschinenelement zugewandten Seite eine erste Oberflächenprofilierung und auf der dem Maschinenelement abgewandten Seite eine zweite Oberflächenprofilierung aufweist, wobei die erste Oberflächenprofilierung - im Längsschnitt der Dichtungsanordnung betrachtet - durch Dichtlippen gebildet ist, die einander mit axialem Abstand benachbart zugeordnet sind und wobei die zweite Oberflächenprofilierung - im Längsschnitt der Dichtungsanordnung betrachtet - durch Rippen gebildet ist, die einander mit axialem Abstand benachbart zugeordnet sind, wobei das erste Verhältnis aus der Höhe der Dichtlippen zur Höhe der Rippen und das zweite Verhältnis aus der Teilung der Dichtlippen zur Teilung der Rippen jeweils größer als 1 ist und wobei ein drittes Verhältnis aus dem axialen Abstand zwischen einander benachbarten Dichtlippen zur Dicke des Dichtabschnitts vorgesehen ist.

### Stand der Technik

Eine solche Dichtungsanordnung ist aus der WO94/29622 bekannt. Sowohl die Dichtlippen als auch die Rippen weisen jeweils einen abgeflachten Dichtbereich auf und sind deshalb - im Längsschnitt betrachtet - trapezförmig gestaltet.

Eine weitere Dichtungsanordnung ist aus der DE 198 36 986 C2 bekannt. Die erste Oberflächenprofilierung ist durch sägezahnförmige Ausnehmungen gebildet und die zweite Oberflächenprofilierung durch im Wesentlichen U-förmige, auf der der Welle abgewandten Seite offene Ausnehmungen, wobei das Verhältnis aus der Höhe der Dichtlippen zur Höhe der Rippen etwa 0,5 und das Verhältnis aus der Teilung der Dichtlippen zur Teilung der Rippen etwa 1 beträgt.

### Darstellung der Erfindung

Der Erfindung liegt die Aufgabe zugrunde, eine Dichtungsanordnung der eingangs genannten Art derart weiterzuentwickeln, dass die Dichtmanschette zumindest an ihrem dem Halteabschnitt abgewandten Ende im Wesentlichen frei von inneren Spannungen ist und das abzudichtende Maschinenelement zuverlässig anliegend umschließt. Außerdem soll die Dichtungsanordnung eine lange Laufzeit aufweisen, bei geringer Verlustleistung; Ölkohleablagerungen sollen minimiert werden.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, dass das erste und das zweite Verhältnis gleich groß sind, dass das erste und das zweite Verhältnis jeweils 3 beträgt und das dritte Verhältnis 1. Durch eine solche Ausgestaltung des Dichtabschnitts werden herstellungsbedingte, unerwünschte innere Spannungen wirkungsvoll vermieden und das dem Halteabschnitt abgewandte Ende des Dichtabschnitts umschließt das abzudichtende Maschinenelement in Umfangsrichtung unter gleichmäßiger elastischer Vorspannung dichtend. Daraus resultierend weist die erfindungsgemäße Dichtungsanordnung verbesserte Gebrauchseigenschaften auf; die Dichtwirkung ist dadurch verbessert.

Wäre demgegenüber das erste Verhältnis aus der Höhe der Dichtlippen zur Höhe der Rippen, wie im Stand der Technik, kleiner als 1, wäre von Nachteil, dass bei geringer Ausgangsdicke der Dichtmanschette diese so stark geschwächt wäre, dass die Vorspannung, mit der die Dichtmanschette das Maschinenelement umfangsseitig umschließt, nicht für Dichtheit ausreichend wäre.

Wäre zusätzlich oder alternativ das zweite Verhältnis aus der Teilung der Dichtlippen zur Teilung der Rippen 1, wie im Stand der Technik, oder sogar kleiner, wäre von Nachteil, dass die Anzahl der Rippen zu klein wäre, um die inneren Spannungen der Dichtmanschette im Dichtabschnitt abzubauen. Das Ende des Dichtabschnitts würde das abzudichtende Maschinenelement nicht unter gleichmäßiger Vorspannung umschließen.

Als besonders vorteilhaft hat es sich bewährt, wenn das erste und das zweite Verhältnis gleich groß sind und 3 betragen. Bei einem solchen Verhältnis ist von Vorteil, dass dadurch die längsten Laufzeiten, die geringste Verlustleistung und die kleinsten Ölkohleablagerungen erreicht werden.

Wäre das erste Verhältnis demgegenüber wesentlich größer als 3, beispielsweise größer als 35, wäre von Nachteil, dass die zweite Oberflächenprofilierung wegen zu geringer Höhe der Rippen nicht die gestellten Anforderungen erfüllen könnte.

Wäre das zweite Verhältnis demgegenüber wesentlich größer als 3, beispielsweise größer als 6, wäre von Nachteil, dass die zweite Oberflächenprofilierung wegen zu geringer Oberfläche der Rippen ihre Wirkung verlieren würde.

Die vorteilhaften Gebrauchseigenschaften des erfindungsgemäßen Dichtrings werden dadurch wesentlich unterstützt, wenn ein drittes Verhältnis aus dem axialen Abstand zwischen einander benachbarten Dichtlippen zur Dicke des Dichtabschnitts 1 beträgt. Hierbei ist von Vorteil, dass die Dichtlippen eine funktionsgerechte große Oberfläche haben, ohne die Dichtmanschette unzulässig zu schwächen.

Würde das dritte Verhältnis demgegenüber deutlich von 1 abweichen, also beispielsweise nur 0,5 betragen, wäre von Nachteil, dass bei funktionsfähigem axialem Abstand zwischen einander benachbarten Dichtlippen die Dichtmanschette so dick sein müsste, dass sie nicht mehr den Rundlaufabweichungen der Welle folgen könnte, was Undichtheit zur folge hätte.

Wäre demgegenüber das dritte Verhältnis größer als 1 und würde beispielsweise 3 betragen, wäre von Nachteil, dass die Anzahl der Dichtlippen für eine ausreichende Rückförderwirkung zu klein wäre.

Durch die erfindungsgemäße vorteilhafte Abstimmung der drei Verhältnisse der erfindungsgemäßen Dichtmanschette ist im Vergleich zum Dichtring aus dem eingangs zitierten Stand der Technik die Temperatur im Dichtspalt und die Verlustleistung vermindert, so dass das Dichtvermögen verbessert und die Gebrauchsdauer verlängert ist.

Die erfindungsgemäße Abstimmung der drei Verhältnisse erlaubt eine sehr dünne Dichtmanschette, was eine besonders wirtschaftliche Fertigung zur Folge hat.

Die Dichtlippen und die Rippen können die gleiche oder eine verschiedene Form haben. Vorteilhaft sind - im Längsschnitt der Dichtungsanordnung betrachtet - Formen wie im Wesentlichen Dreiecke, gleichschenklige Dreiecke und sägezahnförmige Gestaltungen. Möglich sind auch U-förmige oder sinusförmige Gestaltungen. Die Auswahl erfolgt unter Berücksichtigung der Betriebsbedingungen und des abzudichtenden Mediums.

Gemäß einer vorteilhaften Ausgestaltung kann es vorgesehen sein, dass die Rippen und/oder die Dichtlippen - in Umfangsrichtung des Dichtrings - schraubengangförmig ausgebildet sind. In Verbindung mit den vorgenannten Profilen ist bei einer derart gestalteten ersten Oberflächenprofilierung von Vorteil, dass für den Fall, wenn die Dichtungsanordnung als Radialwellendichtring verwendet wird, abzudichtendes Medium ausgezeichnet aus dem Bereich radial zwischen Dichtlippen und abzudichtendem Maschinenelement in Richtung des abzudichtenden Raums zurückgefördert werden kann. Der Rückförderdrall, der nicht Gegenstand der vorliegenden Erfindung ist und vom Fachmann, abhängig vom jeweiligen Anwendungsfall vorgesehen werden kann, kann derart ausgebildet sein, dass unabhängig von der Drehrichtung der abzudichtenden Welle eine Rückförderwirkung des abzudichtenden Mediums in den abzudichtenden Raum erfolgt. Eine statische Abdichtung bei stillstehender Welle kann dadurch erfolgen, dass der Drall an einer Stelle verschlossen ist.

Die Ausnehmungen, die die Dichtlippen begrenzen, sind im Vergleich zu Einschnitten, durch die Dichtlippen begrenzt sein können, in ihrem Volumen vergleichsweise groß, so dass die Ausnehmungen besonders gut zur Aufnahme von Verunreinigungen aus dem abzudichtenden Medium, beispielsweise zur Aufnahme von Ölkohle geeignet sind. Durch die Anordnung der Dichtlippen und der Rippen und die vorteilhafte Ausgestaltung des Dichtrings wird bewirkt, dass die Dichtmanschette in radialer Richtung sehr flexibel ist und den Bewegungen der abzudichtenden Welle, auch bei Rundlaufabweichungen, gut zu folgen vermag. Außerdem weist die Dichtmanschette in ihrem Dichtabschnitt eine vergleichsweise große Oberfläche auf und ist dadurch besonders gut geeignet, entstehende Reibungswärme vom Dichtabschnitt rasch an die Umgebung abzuführen.

Zumindest der Dichtabschnitt besteht bevorzugt aus einem PTFE-Compound. Die Dichtmanschette ist dadurch gegen die meisten abzudichtenden Medien resistent. Außerdem weisen PTFE-Werkstoffe eine gute Temperaturbeständigkeit auf, ein gutes Gleitverhalten und ausgezeichnete Notlaufeigenschaften, falls die Schmierung im Bereich des Dichtabschnitts ausfällt. Eine Dichtmanschette aus PTFE-Werkstoff ist nahezu verschleißfrei, da nach einem gewissen Anfangsverschleiß die Oberfläche glasiert und dadurch sehr widerstandsfähig wird.

Beispielsweise können auch spritzgießbare Copolymerisate zur Anwendung gelangen, wie FEP (Perfluorethylenpropylen) oder PFA (Perfluoralcoxycopolymer) oder ein thermoplastisches Elastomer.

Der Halteabschnitt kann mittels einer Zwischenschicht aus elastomerem Werkstoff mit einem Stützkörper verbunden sein. Die Stützkörper besteht aus einem zähharten Werkstoff, bevorzugt aus einem Blechring. Blechringe sind einfach und kostengünstig herstellbar. Als Korrosionsschutz kann ein solcher Stützkörper vom elastomeren Werkstoff der Zwischenschicht zumindest teilweise, bevorzugt vollständig umschlossen sein.

Die zuvor beschriebene Dichtungsanordnung kann als Radialwellendichtring zur Anwendung gelangen. Speziell für die Abdichtung rotierender Wellen ist die Ausgestaltung der ersten und zweiten Oberflächeprofilierung von besonderem Vorteil, da der Dichtabschnitt auch dann die abzudichtende Welle zuverlässig dichtend umschließt, wenn diese Unrundheiten und/oder Unwuchten aufweist und der Dichtabschnitt der Dichtmanschette daher in radialer Richtung hin- und herverlagert wird.

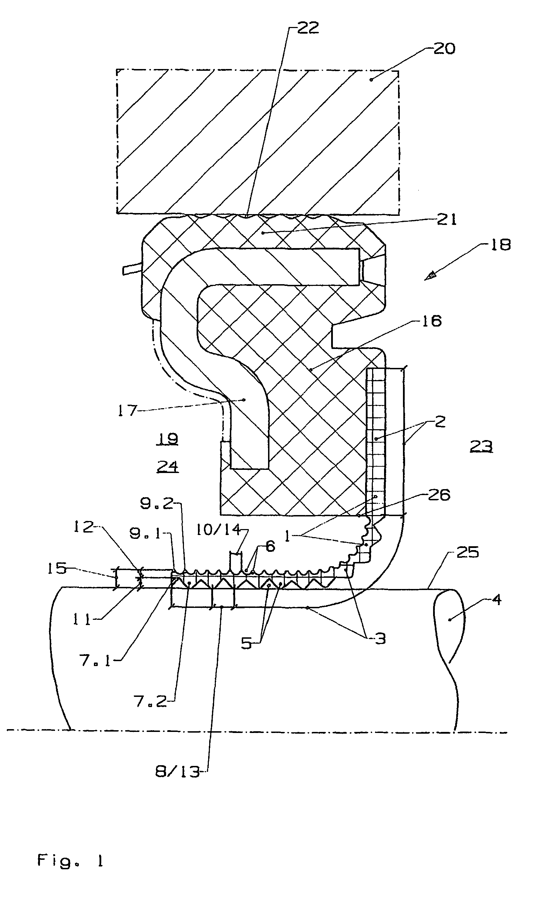

Ein Ausführungsbeispiel der erfindungsgemäßen Dichtungsanordnung wird nachfolgend anhand der Zeichnung näher erläutert.

### Ausführung der Erfindung

Die Dichtmanschette 1 bildet einen Bestandteil einer Dichtungsanordnung 18. Die Dichtungsanordnung 18 ist dabei in den Einbauraum 19 zwischen dem abzudichtenden Maschinenelement 4, das hier als Welle ausgebildet ist, und einem schematisch dargestellten Gehäuse 20 angeordnet. Gegenüber dem Gehäuse 20 dichtet der Dichtring mit einer statischen Dichtung 21 ab, die, im Längsschnitt betrachtet, eine wellenförmige Oberfläche 22 aufweist und kraftschlüssig gegenüber dem Gehäuse abdichtet. Die statische Dichtung 21 besteht aus einem elastomerem Werkstoff und ist einstückig ineinander übergehend mit der Zwischenschicht 16 ausgebildet, mittels der die Dichtmanschette 1, die in diesem Ausführungsbeispiel aus PTFE-Compound besteht, mit dem Stützkörper 17 verbunden ist. Der Stützkörper 17 ist als Blechring ausgebildet und mit der Zwischenschicht 16 und der statischen Dichtung 21 durch Vulkanisation verbunden.

Die Dichtmanschette 1 besteht aus dem Halteabschnitt 2 und dem Dichtabschnitt 3, wobei sich in diesem Ausführungsbeispiel der Dichtabschnitt 3 bis zur radial inneren Kante 26 der Zwischenschicht 16 erstreckt und direkt in den Halteabschnitt 2 übergeht.

In diesem Ausführungsbeispiel ist der Dichtabschnitt 3 entgegen dem abzudichtenden Raum 23 vorgewölbt, also beispielsweise in Richtung der Luftseite 24.
Eine davon abweichende Ausgestaltung, bei der der Dichtabschnitt 3 in Richtung des abzudichtenden Raums 23 vorgewölbt ist, ist generell ebenfalls denkbar.

Der Dichtabschnitt 3 umschließt die Oberfläche 25 des abzudichtenden Maschinenelements 4 unter elastischer Vorspannung umfangsseitig dichtend, wobei durch die zweite Oberflächenprofilierung 6 und deren Ausgestaltung, bezogen auf die erste Oberflächenprofilierung 5, unerwünschte innere Spannungen innerhalb des Dichtabschnitts 3 vermieden werden und das dem Halteabschnitt 2 abgewandte Ende des Dichtabschnitts 3 das abzudichtenden Maschinenelement 4 stets anliegend umschließt; ein Abheben des Dichtabschnitts 3 von der Oberfläche 25 des abzudichtenden Maschinenelements 4 in Folge von inneren Spannungen wird zuverlässig ausgeschlossen.

Im dargestellten Längsschnitt des Dichtrings betrachtet, ist die erste Oberflächenprofilierung 5 durch Dichtlippen 7.1, 7.2, ... gebildet, die einander mit axialem Abstand 8 benachbart zugeordnet sind. Die erste Oberflächenprofilierung 5 ist dem abzudichtenden Maschinenelement 4 zugewandt.

Die zweite Oberflächenprofilierung 6, die dem Maschinenelement 4 abgewandt ist, ist - ebenfalls im Längsschnitt des Dichtrings betrachtet - durch Rippen 9.1, 9.2, .... gebildet, die einander ebenfalls mit axialem Abstand 10 benachbart zugeordnet sind.

Entscheidend für die Vermeidung unerwünschter innerer Spannungen innerhalb des Dichtabschnitts sind die jeweiligen Ausgestaltungen der ersten und zweiten Oberflächenprofilierung 5, 6. Das erste Verhältnis aus Höhe 11 der Dichtlippen 7.1, 7.2, ... zur Höhe 12 der Rippen 9.1, 9.2, ... und das zweite Verhältnis aus der Teilung 13 der Dichtlippen 7.1, 7.2, ... zur Teilung 14 der Rippen (9.1, 9.2, ...) muß jeweils größer als 1 sein. Besonders vorteilhaft sind die Gebrauchseigenschaften dann, wenn das erste und das zweite Verhältnis gleich groß sind und das erste und das zweite Verhältnis jeweils 3 beträgt, wie in diesem Ausführungsbeispiel gezeigt.

Zur Abdichtung eines Maschinenelements 4, in diesem Ausführungsbeispiel eine Welle mit 85 mm Durchmesser, beträgt die Höhe 11 der Dichtlippen 7.1, 7.2, ... 0,27 und die Höhe 12 der Rippen 9.1, 9.2, ... 0,09. Die Teilung 13, die dem axialen Abstand 8 zwischen den Dichtlippen 7.1, 7.2, ... entspricht, beträgt in einem solchen Fall 0,6, die Teilung 14, die dem axialen Abstand zwischen den Rippen 9.1, 9.2, ... entspricht, beträgt demgegenüber 0,2.

Ein drittes Verhältnis, das aus dem axialen Abstand 8 zwischen einander benachbarten Dichtlippen 7.1, 7.2, ... und der Dicke 15 des Dichtabschnitts 3 gebildet wird, beträgt in dem hier gezeigten, bevorzugten Ausführungsbeispiel annähernd 1.

Um eine Rückförderung des abzudichtenden Mediums in den abzudichtenden Raum 23 zu gewährleisten, ist zumindest die erste Oberflächenprofilierung schraubengangförmig ausgebildet, wobei bei entsprechend ausgebildetem Drall eine Rückförderwirkung in Richtung des abzudichtenden Raums 23 in beiden Drehrichtungen des abzudichtenden Maschinenelements 4 erfolgt.

## Patentansprüche

1. Dichtungsanordnung, umfassend eine Dichtmanschette (1) aus polymerem Werkstoff mit einem Halteabschnitt (2) und einem Dichtabschnitt (3), wobei der Dichtabschnitt (3) im Gebrauch ein abzudichtendes Maschinenelement (4) unter elastischer Vorspannung umfangsseitig dichtend umschließt und auf der dem Maschinenelement (4) zugewandten Seite eine erste Oberflächenprofilierung (5) und auf der dem Maschinenelement (4) abgewandten Seite eine zweite Oberflächenprofilierung (6) aufweist, wobei die erste Oberflächenprofilierung (5) - im Längsschnitt der Dichtungsanordnung betrachtet - durch Dichtlippen (7.1, 7.2, ...) gebildet ist, die einander mit axialem Abstand (8) benachbart zugeordnet sind und wobei die zweite Oberflächenprofilierung (6) - im Längsschnitt der Dichtungsanordnung betrachtet - durch Rippen (9.1, 9.2, ...) gebildet ist, die einander mit axialem Abstand (10) benachbart zugeordnet sind, wobei das erste Verhältnis aus der Höhe (11) der Dichtlippen (7.1, 7.2, ...) zur Höhe (12) der Rippen (9.1, 9.2, ...) und das zweite Verhältnis aus der Teilung (13) der Dichtlippen (7.1, 7.2, ...) zur Teilung (14) der Rippen (9.1, 9.2, ...) jeweils größer als 1 ist und wobei ein drittes Verhältnis aus dem axialen Abstand (8) zwischen einander benachbarten Dichtlippen (7.1, 7.2, ...) zur Dicke (15) des Dichtabschnitts (3) vorgesehen ist, **dadurch gekennzeichnet, dass** das erste und das zweite Verhältnis gleich groß sind, dass das erste und das zweite Verhältnis jeweils 3 beträgt und dass das dritte Verhältnis 1 beträgt.

2. Dichtungsanordnung nach Anspruch 1, **dadurch gekennzeichnet, dass** die Dichtlippen (7.1, 7.2, ...) und/oder die Rippen (9.1, 9.2, ...) - im Längsschnitt der Dichtungsanordnung betrachtet - sägezahnförmig ausgebildet sind.

3. Dichtungsanordnung nach einem der Ansprüche 1 oder 2, **dadurch gekennzeichnet, dass** die Dichtlippen (7.1, 7.2, ...) und/oder die Rippen (9.1, 9.2, ...) - im Längsschnitt der Dichtungsanordnung betrachtet - die Form gleichschenkliger Dreiecke haben.

4. Dichtungsanordnung nach einem der Ansprüche 1 bis 3, **dadurch gekennzeichnet, dass** die Dichtlippen (7.1, 7.2, ...) und/oder die Rippen (9.1, 9.2, ...) - in Umfangsrichtung der Dichtungsanordnung - jeweils schraubengangförmig ineinander übergehend ausgebildet sind.

5. Dichtungsanordnung nach einem der Ansprüche 1 bis 4, **dadurch gekennzeichnet, dass** zumindest der Dichtabschnitt (3) aus PTFE-Compound besteht.

6. Dichtungsanordnung nach einem der Ansprüche 1 bis 5, **dadurch gekennzeichnet, dass** der Halteabschnitt (2) mittels einer Zwischenschicht (16) aus polymerem Werkstoff mit einem Stützkörper (17) verbunden ist.

7. Verwendung einer Dichtungsanordnung gemäß einem der Ansprüche 1 bis 6 als Radialwellendichtring.

## Claims

1. Sealing arrangement, comprising a sealing collar (1) of polymeric material with a holding portion (2) and a sealing portion (3), the sealing portion (3) during use circumferentially enclosing with a sealing effect and under elastic prestress a machine element (4) that is to be sealed and having a first surface profiling (5) on the side facing the machine element (4) and a second surface profiling (6) on the side facing away from the machine element (4), the first surface profiling (5) being formed - when viewed in longitudinal section of the sealing arrangement - by sealing lips (7.1, 7.2, ...) which are assigned to one another adjacently with an axial spacing (8) and the second surface profiling (6) being formed - when viewed in longitudinal section of the sealing arrangement - by ribs (9.1, 9.2, ...) which are assigned to one another adjacently with an axial spacing (10) the first ratio of the height (11) of the sealing lips (7.1, 7.2, ...) to the height (12) of the ribs (9.1, 9.2, ...) and the second ratio of the pitch (13) of the sealing lips (7.1, 7.2, ...) to the pitch (14) of the ribs (9.1, 9.2, ...) being in each case greater than 1, and a third ratio of the axial spacing (8) between mutually adjacent sealing lips (7.1, 7.2, ...) to the thickness (15) of the sealing portion (3) being provided, **characterized in that** the first and second ratios are equal, **in that** the first and second ratios are in each case 3 and **in that** the third ratio is 1.

2. Sealing arrangement according to Claim 1, **characterized in that** the sealing lips (7.1, 7.2, ...) and/or the ribs (9.1, 9.2, ...) are formed - when viewed in longitudinal section of the sealing arrangement - in a sawtooth shape.

3. Sealing arrangement according to either of Claims 1 and 2, **characterized in that** the sealing lips (7.1, 7.2, ...) and/or the ribs (9.1, 9.2, ...) have - when viewed in longitudinal section of the sealing arrangement - the shape of isosceles triangles.

4. Sealing arrangement according to one of Claims 1 to 3, **characterized in that** the sealing lips (7.1, 7.2, ...) and/or the ribs (9.1, 9.2, ...) are formed - in the circumferential direction of the sealing arrangement - such that they merge with one another in each case in a helical shape.

5. Sealing arrangement according to one of Claims 1 to 4, **characterized in that** at least the sealing portion (3) consists of PTFE compound.

6. Sealing arrangement according to one of Claims 1 is 5, **characterized in that** the holding portion (2) is connected to a supporting body (17) by means of an intermediate layer (16) of polymeric material.

7. Use of a sealing arrangement according to one of Claims 1 to 6 as a radial shaft sealing ring.

## Revendications

1. Dispositif d'étanchéité, comprenant une manchette d'étanchéité (1) en une matière polymère avec une partie de soutien (2) et une partie d'étanchéité (3), dans lequel la partie d'étanchéité (3) entoure en service, de façon étanche sur la périphérie, un élément de machine à rendre étanche (4) avec une précontrainte élastique et présente sur le côté tourné vers l'élément de machine (4) un premier profilage de surface (5) et sur le côté situé à l'opposé de l'élément de machine (4) un deuxième profilage de surface (6), dans lequel le premier profilage de surface (5) - considéré en coupe longitudinale du dispositif d'étanchéité - est formé par des lèvres d'étanchéité (7.1, 7.2, ...), qui sont proches l'une de l'autre avec une distance axiale (8), et dans lequel le deuxième profilage de surface (6) - considéré en coupe longitudinale du dispositif d'étanchéité - est formé par des nervures (9.1, 9.2, ...), qui sont proches l'une de l'autre avec une distance axiale (10), dans lequel le premier rapport de la hauteur (11) des lèvres d'étanchéité (7.1, 7.2, ...) à la hauteur (12) des nervures (9.1, 9.2, ...) et le deuxième rapport du pas (13) des lèvres d'étanchéité (7.1, 7.2, ...) au pas (14) des nervures (9.1, 9.2, ...) est chaque fois supérieur à 1, et dans lequel il est prévu un troisième rapport de la distance axiale (8) entre des lèvres d'étanchéité proches l'une de l'autre (7.1, 7.2, ...) à l'épaisseur (15) de la partie d'étanchéité (3), **caractérisé en ce que** le premier et le deuxième rapports sont égaux, **en ce que** le premier et le deuxième rapports valent chacun 3 et **en ce que** le troisième rapport vaut 1.

2. Dispositif d'étanchéité selon la revendication 1, **caractérisé en ce que** les lèvres d'étanchéité (7.1, 7.2, ...) et/ou les nervures (9.1, 9.2, ...) - considérées en coupe longitudinale du dispositif d'étanchéité - sont réalisées en forme de dents de scie.

3. Dispositif d'étanchéité selon l'une quelconque des revendications 1 ou 2, **caractérisé en ce que** les lèvres d'étanchéité (7.1, 7.2, ...) et/ou les nervures (9.1, 9.2, ...) - considérées en coupe longitudinale du dispositif d'étanchéité - ont la forme de triangles isocèles.

4. Dispositif d'étanchéité selon l'une quelconque des revendications 1 à 3, **caractérisé en ce que** les lèvres d'étanchéité (7.1, 7.2, ...) et/ou les nervures (9.1, 9.2, ...) - considérées en direction périphérique du dispositif d'étanchéité - sont chaque fois réalisées en forme de pas de vis se fondant l'un dans l'autre.

5. Dispositif d'étanchéité selon l'une quelconque des revendications 1 à 4, **caractérisé en ce qu'**au moins la partie d'étanchéité (3) est constituée d'un composé de PTFE.

6. Dispositif d'étanchéité selon l'une quelconque des revendications 1 à 5, **caractérisé en ce que** la partie de soutien (2) est assemblée à un corps de soutien (17) au moyen d'une couche intermédiaire (16) en matière polymère.

7. Utilisation d'un dispositif d'étanchéité selon l'une quelconque des revendications 1 à 6 comme joint d'arbre radial.
